# EUROPEAN PATENT APPLICATION

(11) **EP 4 564 060 A2**
(43) Date of publication of application: **04.06.2025**
(21) Application number: 24206901.1
(22) Date of filing: 16.10.2024
(51) Int. Cl.: G01S 19/48

(54) **LOCAL POSITIONING SYSTEM FOR GLOBAL NAVIGATION SATELLITE SYSTEM DENIED REGIONS**

(30) Priority: 09.11.2023 IN 202311076588; 04.01.2024 US 202418404417
(71) Applicant: Honeywell International Inc., Charlotte, NC 28202 (US)
(72) Inventor: RAJAN, Mithunraj Velambath, Charlotte, 28202 (US); MOHAMMED, Shohab Abdul Hameed Basargod, Charlotte, 28202 (US); KAMODULA, Priyanka, Charlotte, 28202 (US)
(74) Representative: Haseltine Lake Kempner LLP

(57) **Abstract**

A navigation system is provided. A GNSS receiver is used to receive satellite signals from a plurality satellites and an local positioning system (LPS) receiver is used to receive LPS signals from a plurality of fixed location LPS transmitters that are positioned to form an LPS coverage region. A controller is in communication with the GNSS receiver and the LPS receiver. The controller is configured to use LPS signals to determine a location of the vehicle when the vehicle is within the LPS coverage region and within a GNSS denied coverage region. The LPS coverage region is a region that provides the LPS signals from at least four fixed location LPS transmitters. Each LPS signal from each LPS transmitter includes LPS transmitter location information and clock information used by the controller of the vehicle to determine the location of the vehicle.

## Description

### CROSS-REFERENCE TO RELATED APPLICATIONS

This Application claims priority to Indian Provisional Application No. 202311076588, same title herewith, filed on November 9, 2023, which is incorporated in its entirety herein by reference.

### BACKGROUND

Aeronautical vehicles, including manned and autonomous vehicles, often rely on highly accurate navigation systems when traversing through a travel path. In some applications, it is required that a vehicle conduct localization (position initialization) quickly and precisely to avoid obstacles in unknown environments. One type of navigation system used to determine the location of an aeronautical vehicle blends an inertial navigation system (INS) with a global navigation satellite system (GNSS) such as a global positioning system (GPS). In GNSS denied environments (regions where satellite signals from enough satellites needed to determine a location are not present), navigation of vehicles, especially aeronautical vehicles, can be a challenge even with a blended navigation system.

Further, as urban and suburban areas are developing day by day, the number of GNSS denied regions are increasing with the increase of tall buildings. Alternative navigation technologies that use sensors like cameras, light detection and radar (LiDAR), radar, radios and star-trackers have been used to augment and improve INS data in GNSS denied regions. However, these existing alternate navigation solutions have accuracy and availability limitations and may not be accurate enough for current and future aviation needs.

For the reasons stated above and for other reasons stated below which will become apparent to those skilled in the art upon reading and understanding the present specification, there is a need in the art for a robust and accurate system to provide location information for navigation of vehicle in GNSS denied regions.

### SUMMERY

The following summary is made by way of example and not by way of limitation. It is merely provided to aid the reader in understanding some of the aspects of the subject matter described. Embodiments use a local positioning system (LPS) to supplement a GNSS such as, but not limited to, a GPS in GNSS denied regions.

In one embodiment, a method of determining a location of a vehicle is provided. The method includes using a global navigation satellite system (GNSS) to determine the location of the vehicle when satellite signals from at least four satellites of the GNSS are being received by a GNSS receiver of the vehicle; and using a local positioning system (LPS) to determine the location of the vehicle when the vehicle is within a LPS coverage region of the LPS, wherein the LPS coverage region is a region that provides a LPS signal from at least four fixed location LPS signal transmitters, each LPS signal from each LPS transmitter includes transmitter location information and clock information used by a controller of the vehicle to determine the location of the vehicle.

In another embodiment, a navigation system is provided. The vehicle location determining system includes a GNSS receiver, LPS positioning system receiver, a memory, and a controller. The GNSS is used to receive satellite signals from a plurality satellites. The LPS receiver is used to receive LPS signals from a plurality of fixed location LPS transmitters that are positioned to form an LPS coverage region. The memory to store at least operating instructions. The controller is in communication with the GNSS receiver, the LPS receiver, and the memory. The controller is configured to use the LPS signals to determine a location of the vehicle when the vehicle is within the LPS coverage region and within a GNSS denied coverage region. The LPS coverage region is a region that provides the LPS signals from at least four fixed location LPS transmitters. Each LPS signal from each LPS transmitter includes LPS transmitter location information and clock information used by the controller of the vehicle to determine the location of the vehicle.

In still another embodiment, another vehicle location determining system that uses an LPS is provided. The vehicle location determining system includes a display, GNSS receiver, LPS positioning system receiver, an INS, a memory, and a controller. The GNSS receiver is used to receive satellite signals from a plurality of satellites. The LPS receiver is used to receive LPS signals from a plurality of fixed location LPS transmitters that are positioned to form an LPS coverage region. The INS is used to at least determine relative measurements given an initial reference. The memory is used to store at least operating instructions. The memory includes a database that includes at least GNSS coverage regions and LPS coverage regions. The controller is in communication with the GNSS receiver, the LPS receiver, the INS, the memory, and the display. The controller is configured to use the LPS signals to determine a location of the vehicle when the vehicle is within the LPS coverage region and within a GNSS denied coverage region. The LPS coverage region is a region that provides the LPS signals from at least four fixed location LPS transmitters. Each LPS signal from each LPS transmitter includes LPS transmitter location information and clock information used by the controller of the vehicle to determine the location of the vehicle. The controller further configured to use the location of the vehicle determined with the use of the LPS to calibrate the INS. The controller is also configured to use the display to display the GNSS coverage regions and the LPS coverage regions stored in the database.

### BRIEF DESCRIPTION OF THE DRAWINGS

The present invention can be more easily understood and further advantages and uses thereof will be more readily apparent, when considered in view of the detailed description and the following figures in which:
Figure 1 is an illustration of an aircraft traveling in a GPS denied environment according to an example aspect of the present invention;
Figure 2 is a block diagram of a navigation system according to an example aspect of the present invention;
Figure 3A illustrates a method of determining a location of a vehicle in a vehicle location flow diagram according to an example aspect of the present invention;
Figure 3B illustrates a method of using a LPS in a LPS flow diagram according to an example aspect of the present invention;
Figure 4 illustrates a transmitter information flow diagram according to an example aspect of the present invention;
Figure 5 illustrates an integrity check position computation chart according to an example aspect of the present invention;
Figure 6 illustrates an integrity of position flow diagram according to an example aspect of the present invention;
Figure 7 illustrates a vehicle operation flow diagram according to an example aspect of the present invention;
Figure 8 illustrates a coverage region flow diagram according to an example aspect of the present invention;
Figure 9 illustrates an overlap transitioning flow diagram according to an example aspect of the present invention;
Figure 10 illustrates a coordinated vehicle movement flow diagram according to an example aspect of the present invention; and
Figure 11 illustrates an error correction flow diagram according to an example aspect of the present invention.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments of the present invention use a navigation system that includes a local positioning system (LPS) that supplements a global navigation satellite system (GNSS) such as, but not limited to, a global positioning system (GPS). In one example, the LPS includes an LPS position controller, that may be hosted in a high integrity navigation receiver. The LPS position controller is configured to conduct LPS computations on received LPS signals to determine the location of an associated vehicle. The LPS signals are provided by a plurality of transmitters. Each transmitter is integrated with a high-resolution atomic clock. The transmitters are installed at strategic locations on available urban infrastructure (streetlights, power transmission towers, mobile communication towers, buildings, etc.) in the GNSS inaccessible areas (GNSS denied regions) of the urban air region to create LPS coverage regions.

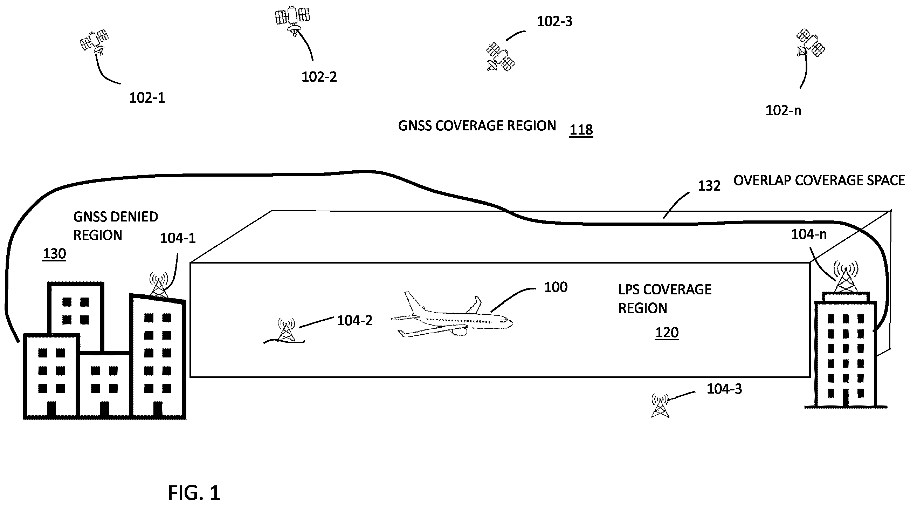

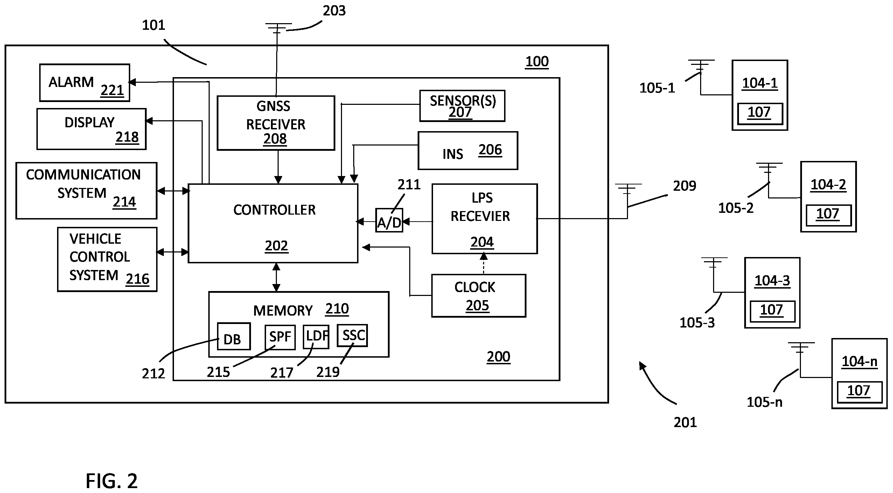

Referring to Figure 1, an example vehicle 100 that employs a vehicle location determining system 101 that uses an LPS 201 (as illustrated in Figure 2) in a GNSS denied region 130 is illustrated. Vehicle 100 in this example is shown as an aircraft; however, any type of vehicle (i.e., any type of airborne, land-based, or water-based vehicle either manned or unmanned) that uses a navigation system may implement LPS 201 for navigation. Further a LPS 201 may be used to supplement other navigation systems of the vehicle in a GNSS denied region.

In the example of Figure 1, satellites 102-1, 102-2, 102-3 through 102-n generate satellite signals used by vehicle 100 for navigation purposes. However, there are regions in which satellite signals, from a number of different satellites (generally referenced by 102) needed to determine a location, cannot reach. These areas are called herein "GNSS denied regions." An example of a GNSS denied region is GNSS denied region 130 in Figure 1. In this GNSS denied region 130, a vehicle, such as vehicle 100, may try and rely on other navigational systems, such as but not limited to, an inertial navigation system (INS). GNSS denied regions may occur due to objects, such as buildings and terrain, that are blocking satellite signals from reaching the GNSS denied regions. There may also be overlap coverage regions, such as overlap coverage region 132 where both the GNSS and LPS may be used to determine vehicle position (location) information. In one example, when both GNSS and LPS are available, GNSS locations are used.

Embodiments provide an LPS 201 that can be used within LPS coverage regions, such as LPS coverage region 120 of Figure 1. LPS 201 includes LPS transceivers 104-1, 104-2, 104-3, 104-n which are positioned to radiate LPS signals within the LPS coverage region 120. The LPS 201 further includes an LPS receiver 204 (illustrated in Figure 2) in vehicle 100 that is configured to receive and process the LPS signals to determine navigation information, such position or location information, as discussed below. As discussed above, the LPS transceivers (generally referenced by 104) may be positioned on streetlights, power transmission towers, mobile communication towers, footpaths, buildings, etc. to cover the LPS coverage region 120 illustrated in Figure 1.

A block diagram of a vehicle 100 is illustrated in Figure 2. Figure 2 illustrates navigation components of a navigation system 200 of vehicle 100 and the LPS 201. In this example, the navigation system 200 of the vehicle 100 includes a controller 202 and memory 210.

In general, the controller 202 may include any one or more of a processor, microprocessor, a digital signal processor (DSP), an application specific integrated circuit (ASIC), a field program gate array (FPGA), or equivalent discrete or integrated logic circuitry. In some example embodiments, controller 202 may include multiple components, such as any combination of one or more microprocessors, one or more controllers, one or more DSPs, one or more ASICs, one or more FPGAs, as well as other discrete or integrated logic circuitry. The functions attributed to controller 202 herein may be embodied as software, firmware, hardware or any combination thereof. Controller 202 may be part of a system controller or a component controller, such as a component controller of the LPS receiver 204. Memory 210 may include computer-readable operating instructions that, when executed by the controller 202 provide location functions. Such location functions may include the functions implementing the LPS described below. The computer readable instructions may be encoded within memory 210. Memory 210 is an appropriate non-transitory storage medium or media including any volatile, nonvolatile, magnetic, optical, or electrical media, such as, but not limited to, a random-access memory (RAM), read-only memory (ROM), non-volatile RAM (NVRAM), electrically-erasable programmable ROM (EEPROM), flash memory, or any other storage medium.

The navigation system 200 of the vehicle 100 further includes a GNSS receiver 208 and an associated GNSS antenna 203, an inertial navigation system (INS) 206 and an LPS receiver 204 with an associated LPS antenna 209. GNSS receiver 208 is designed to receive satellite signals from the satellites 102-1 through 102-n through the GNSS antenna 203 and determine range information to each associated satellite 102-1 through 102-n. The range information is used to determine location information of vehicle 100 when satellite signals from enough satellites (at least four) are received at the GNSS receiver 208. Controller 202 is in communication with the GNSS receiver 208.

The INS 206 is also in communication with controller 202. The INS 206 provides relative measurements given an initial reference. The relevant measurements may be used by controller 202 to determine location, orientation, and velocity of the vehicle 100. These relative measurements, however, can accumulate drift errors over time.

As discussed above, LPS 201 includes an LPS receiver 204 and associated LPS antenna 209 and the LPS transmitters 104-1 through 104-n that are located in specific locations to create an LPS coverage region 120. Each transmitter 104-1 through 104-n includes an associated antenna 105-1, 105-2, 105-3 through 105-n. In one example, radio frequency (RF) transmitted signals are used by the LPS transmitters 104-1 through 104-n. Further in one example, each LPS transmitter 104-1 through 104-n uses its own unique frequency. In this example, controller 202 can identify the LPS transmitter 104-1 through 104-n by looking up the LPS transmitter associated in a database 212 in memory 210. Through associated database information, a location of each LPS transmitter 104-1 through 104-n can be found. In another embodiment, each LPS transmitter 104-1 through 104-n includes in its transmission, LPS transmitter location information.

As discussed above, memory 210 may include database 212 with LPS coverage information including the location of LPS transmitters 104-1 through 104-n. In one example, database 212 may include at least one of locations of LPS coverage region 120, GNSS coverage region 118 and GNSS denied region 130 as illustrated in Figure 1. In one example, GNSS coverage region 118, LPS coverage region 120, and GNSS denied region 130 are displayed for crew members on display 218.

In one embodiment, controller 202 is configured to add LPS coverage region information, not already in the database 212, when detected, which then may be communicated to a remote location via communication system 214. The remote location may compile LPS coverage region information for database 212 and distribute the information to other vehicles. The communication system 214 may also be used by controller 202 to communicate determined location information of vehicle 100.

The vehicle is further illustrated as including a vehicle control system 216 that is used to control, at least in part, operations of the vehicle 100 including direction of travel in one example. Further, in one example, controller 202, based at least in part on determined location information, controls operations of vehicle 100 through the vehicle control system 216.

In one example, controller 202 uses location information derived from signals from LPS transmitters 104-1 through 104-n when satellite signals from satellites 102-1 through 102-n are not available (i.e., when in a LPS coverage region) or when the satellite signals are inaccurate for navigation. In other embodiments, controller 202 supplements location information determined with one of the satellite signals and inertial signals from the INS 206 with location information determined by received LPS signals from transmitters 104-1 through 104-n. In yet another embodiment, signals from transmitters 104-1 through 104-n are used to determine location information of a vehicle 100. As discussed above, the LPS described herein may be applied to any type of moving vehicle including, but not limited to, any type of aircraft including drones and any land and water-based vehicles.

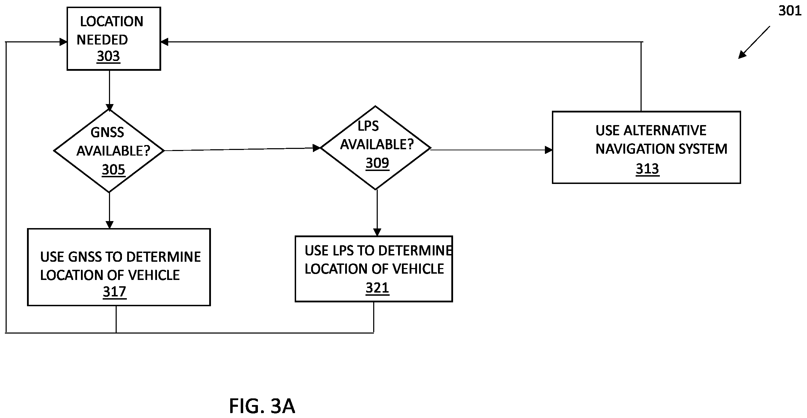

A general method of determining a location of a vehicle is illustrated in a vehicle location flow diagram 301 of Figure 3A. The vehicle location flow diagram 301 is provided as a series of sequential blocks. The sequence of the blocks may occur in another order or even in parallel in other embodiments. Hence, the present invention is not limited to the sequence set out in the vehicle location diagram 301 of Figure 3A.

The vehicle location flow diagram 301 starts at block 303 where it is determined a vehicle location is needed. This may be a need of a navigation system of the vehicle. At block 305 it is determined if GNSS is available. It may determine if GNSS is available based on the detection of satellites signals, known GNSS coverage regions, and known GNSS denied regions as discussed further below. If it is determined at block 303 GNSS is available, GNSS is used at block 317 to determine the location of the vehicle.

If it is determined at block 305, that GNSS is not available, it is then determined at block 309 if LPS is available. If LPS is available, LPS is used to determine the location of the vehicle at block 321. Determining if LPS is available may be done based on detecting LPS signals and known LPS coverage regions. If LPS is not available, an alternative navigation system is used at block 313. For example, a navigation system using INS, radar, LiDAR, etc., may be used. The process then continues at block 303 when another location is needed.

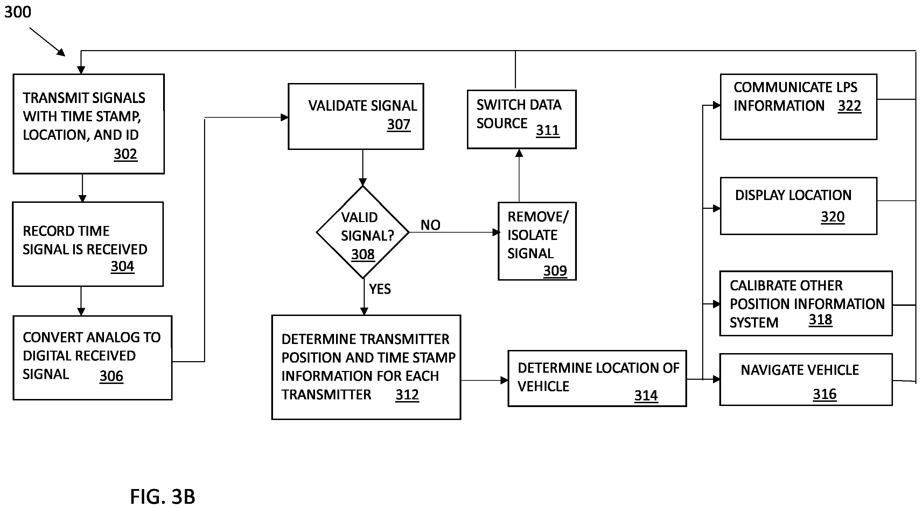

A method of using LPS is provided in an LPS flow diagram 300 of Figure 3B. The LPS flow diagram 300 is provided as a series of sequential blocks. The sequence of the blocks may occur in another order or even in parallel in other embodiments. Hence, the present invention is not limited to the sequence set out in the LPS flow diagram 300 of Figure 3B.

In an embodiment, the LPS transmitters (generally referenced by 104) transmit signals encoded with high resolution time stamp and identification of the LPS transmitter 104 and its location coordinates as indicated in block 302. Each transmitter 104 may include a highly accurate clock 107 used to generate the time stamp in the transmitted signals (LPS signals). The time stamp transmitted corresponds to the time of the transmission of the LPS signal. As soon as the LPS receiver 204 of vehicle 100 receives the LPS signal from a LPS transmitter 104, controller 202 reads the time on a synchronized high-resolution clock 205 and records the reception of the time stamp in memory 210 at block 304. In another example, the LPS receiver 204 is designed to read and record the time from the clock upon receiving the LPS signal. Further in an embodiment, the signal is converted from an analog-to-digital signal with an analog-to-digital converter 211 at block 306. Controller 202 then processes payload data from the received signals that are in a digital format. In processing the payload data in the received signals, controller 202 may implement a signal processing and data extraction function (SPF) 215 that is stored in memory 210. The signal processing and data extraction function 215 is used to decode accurate time stamps and transmitter position information from the payload data. Further in one example the controller 202, memory 210 and clock 205 may all be part of the LPS receiver 204.

In one example, transmitters 104 integrate the high-resolution atomic clock 107 with time division and frequency division multiplexing in transmitting the LPS signals so that there is minimal interference. The transition time may be made in static known intervals associated with each transmitter 104. Identities of the transmitters 104 of an LPS signal may be used to verify the integrity of the signals (i.e., to avoid data from incorrect/hacking transmitters) at block 307.

In an example, database (DB) 212 is used to maintain transmitter 104 identities. Controller 202 may validate received signals at the LPS receiver 204 from a transmitter 104 by validating a transmitter 104 of a transmitted LPS signal at block 307. In one example this can be done by associating a unique frequency used by the transmitter 104 to a frequency associated with the transmitter in database 212. Validating the signals adds to the integrity of LPS by limiting the input signals only to the predefined transmitters. It is determined at block 308 if the signal is valid.

If the signal is determined not to be a valid signal at block 308, the signal is removed or isolated at block 309 and the process continues at block 302. Further in one example, if it is determined the LPS data is not reliable (not a valid signal at block 308), the controller 202 implements a source selection and correction function (SSC) 219 that switches to other reliable data sources (such as location information from the INS 206) at block 311. The process then continues at block 302.

If it is determined to be a valid signal at block 308, transmitter position and transmission time stamp information received from all available valid transmitters is determined at block 312 by controller 202 implementing the signal processing and data extraction function 215.

Once the controller 202 has the position and time stamp information from each valid transmitter 104, the controller 202 implements a location determining function (LDF) 217 on a proper set of transmitter position and transmission time stamp information (i.e., transmitter position and transmission time stamp information from four or more transmitters) to determine a location of the vehicle at block 314. In one example, this is done by determining range information to each transmitter 104 using the time it took to travel from the respective transmitter (i.e., subtracting the transmission time from a receive time). Basic trigonometry calculation may be used to determine the location of the vehicle knowing the range to each of the at least four transmitters at a given time.

The position may be used for navigation of the vehicle as indicated in block 316. In one example this is done with the vehicle control system 216 based at least in part on location information provided by the controller 202. In an example, determined locations of the vehicle by the LPS 201 may be periodically provided to an inertial based navigation system (INS 206 in an example) for calibrating (i.e., correcting drift) as well as for calibration of the other location information systems at block 318. Further, the determination of an LPS location may be used to guide the vehicle to a GNSS coverage region, such a GNSS coverage region 118 of Figure 1 or a designated stopping location, such a vertiport in a GNSS denied region 130. Further in one example, LPS signals from transmitters 104 include priority cues to guide the vehicle 100 to at least one of the GNSS coverage regions, such as GNSS coverage region 118, and designated stopping locations. Controller 202 based on operating instructions, determined locations and the priority cues, guide the vehicle 100 to the GNSS coverage regions or designated stopping locations. In one example, priority cues, which may include directions, guide fixed wing vehicles to desired regions. Fixed wing vehicles may include fixed wing urban air mobility (UAM) vehicles. A UAM traffic management system, in this example, may provide priority guidance cues as part of a service provided in a region, such as LPS coverage region 120.

In one example, the location of the vehicle based on LPS 201 is displayed on display 218 for the operator to review at block 320. In one example, this is done by controller 202 implementing instructions stored in memory 210. Controller 202 may further be configured to cause the display to illustrate GNSS denied regions and LPS coverage regions based on stored information and operating instructions in memory 210. Further, the LPS information, such as the detection of a LPS coverage region is communicated to a remote location at block 322. The LPS information communicated may also include the determined location of the vehicle. The process then continues at block 302.

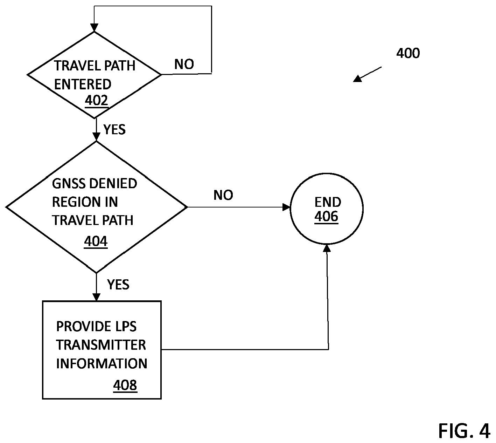

A method of providing LPD transmitter information is illustrated in the transmitter information flow diagram 400 of Figure 4. The transmitter information flow diagram 400 is provided as a series of sequential blocks. The sequence of the blocks may occur in another order or even in parallel in other embodiments. Hence, the present invention is not limited to the sequence set out in the transmitter information flow diagram 400 of Figure 4.

At block 402 it is determined if a travel path has been entered. In an avionic application this would be a flight path. Once a travel path is entered, it is determined if there is a GNSS denied region within the travel path at block 404. If there are no GNSS denied regions within the travel path, the process ends at block 406.

Once it is determined that a vehicle flight path is directed to a GNSS denied region 130, information on the position coordinates of associated LPS transmitters 104 becomes available for the LPS coverage region 120 for the controller 202 at block 408. This allows the controller 202 to determine vehicle location within the LPS coverage region 120 in an example.

The clock value is synchronized with all the other transmitters 104 and receivers in the LPS. The LPS receiver 204 onboard the vehicle 100 may receive all the LPS signals from the transmitters 104 and will be able to decode the coordinates of the transmission and the time stamp associated with the exact time of transmission. Once the receiver 204, or the controller 202 which may be part of the receiver 204 in an example, is able to decode the position, time of transmission and time of reception associated with at least 4 of the transmitters 104, time of travel of the signals is computed. From the time of travel, range information to each transmitter may be determined. For example, if time stamps associated with the at least four transmitters is t1, t2, t3, t4 and the time stamp associated with reception of received signals are tr1, tr2, tr3, t4, the distances (ranges) may be computed by the formula distance = (tri-ti) x c, where c is the speed of light. By knowing the x, y, z position coordinates of 4 transmitters of positions (xi, yi, zi) and distances di (i =1, 2, 3, 4), vehicle location information may then be determined with known trilateration methods used in with GPS.

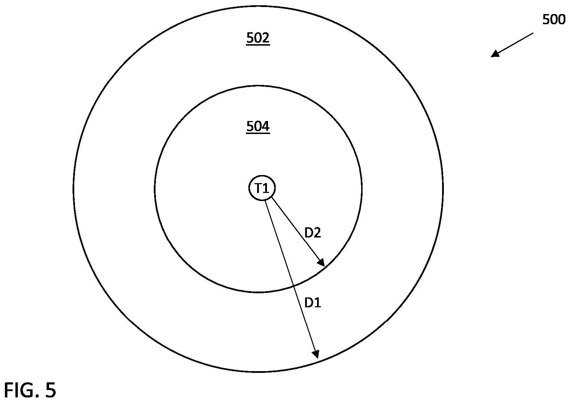

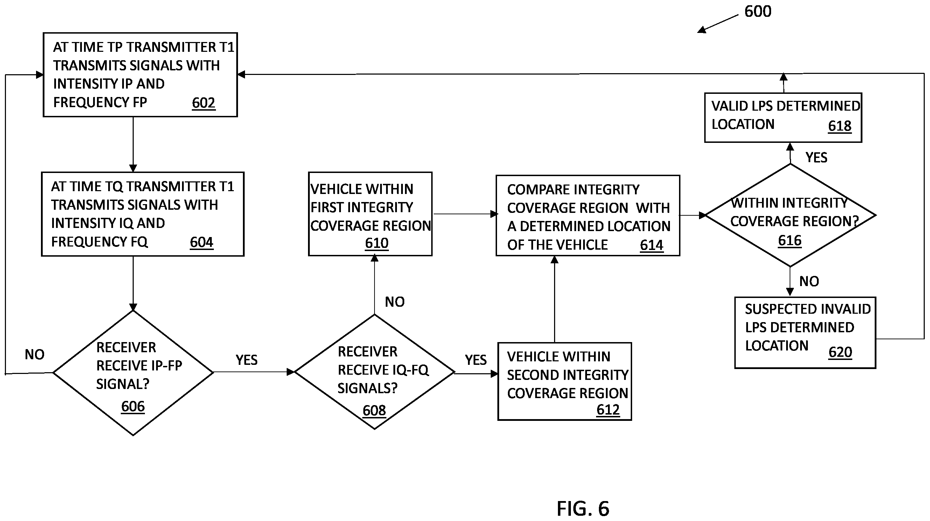

As discussed above, some embodiments may employ an integrity check to verify signals being received at the LPS receiver 204 of the vehicle 100 are coming from valid transmitters 104 associated with the LPS 201. In one example, this is done with signals strengths and frequencies. Referring to Figure 5, an illustration of an integrity check position computation chart 500 is provided. The integrity check position computation chart 500 is described in view of a method illustrated in an integrity of position flow diagram 600 of Figure 6. The integrity of position flow diagram 600 includes a series of sequential blocks. The sequence of blocks may occur in a different order or in parallel in other examples. Hence, the present invention is not limited to the sequence as set out in Figure 6.

The process set out in the integrity of position flow diagram 600 starts at block 602 where at time TP (a first time), transmitter T1 transmits a first LPS signal of intensity IP (first intensity) and frequency FP (a first frequency). At time TQ (as second time), transmitter T1 transmits a second LPS signals of intensity IQ (second intensity) and frequency FQ (as second frequency) at block 604. In this example, the first intensity is greater than the second intensity. Figure 5 illustrates a distance D1 in which the first LPS signals with intensity IP (the first intensity) from transmitter T1 should reach. Hence, a vehicle receiver within first coverage region 502 (within the range of the first LPS signal of the first intensity) should be able to detect the first LPS signal of the first intensity. The second LPS signal of the second intensity should extend a distance indicated by D2. A vehicle receiver within a second coverage region 504 will be able to detect the second LPS signal of the second intensity and also the first integrity LPS of the first intensity.

At block 606 it is determined if the receiver 204 of the vehicle 100 has received the T1 transmit IP-FP signals that would indicate, the vehicle 100 is within the first coverage region 502 (or sector) set by distance D1 of Figure 5. If the receiver has not received the IP-FP signals, the vehicle may be currently outside the range of transmitter T1. The process may continue with the transmitter transmitting new transmit signals of a select intensity and select frequency at timed intervals in an example at block 602.

If it is determined at block 606 the receiver 204 of the vehicle 100 has received an IP-FP signal (first LPS signal), it is then determined at block 608 if the receiver has also received the IQ-FQ signal (second LPS signal). If the IQ-FQ signals have not been received, it is determined at block 610 the vehicle 100 is within integrity coverage region 502. If, however, it is determined that the IQ-FQ signal (second LPS signal) has also been received at block 608, it is determined at block 612 that the vehicle 100 is within the second integrity coverage region 504.

In the example of Figure 6, at block 614, the determined integrity coverage region the vehicle is located in is compared with a determined LPS location by the LPS 201. If it is determined at block 616, the LPS location is within a determined integrity coverage region, the LPS location is determined valid at block 618. The LPS location determination may then be used for navigation of vehicle 100. If it is determined at block 616, the LPS location is not within a determined integrity coverage region, the LPS location is determined invalid at block 620. The LPS location determination may then not be used for navigation of vehicle 100. In this case, other navigation systems may be used. The process then continues at block 602.

Further in an example, using the same transmitter T1 with multiple intensities, with maximum possible distances D1, D2, etc., the position of the vehicle 100 can be approximated and can be used to isolate diverging distance computations. Further, this process can be replicated for other transmitters as well with no two close transmitters having the same frequency. If a distance related to a particular transmitter is not within possible integrity coverage regions, the data may be isolated and not used for computation of the position of the vehicle by the LPS. This helps in determining the integrity of LPS signals.

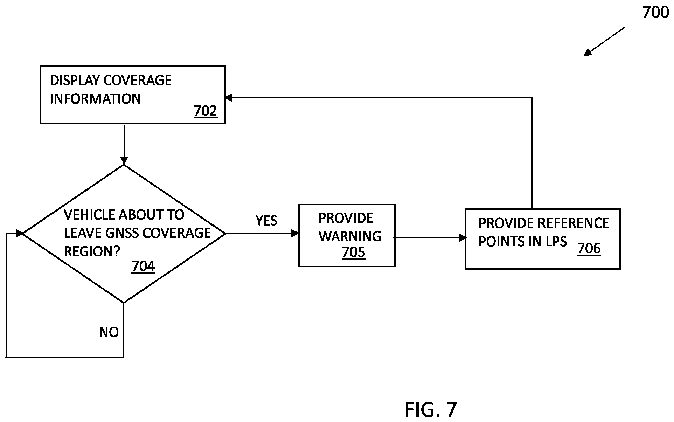

A method of operating a vehicle is illustrated in the vehicle operation flow diagram 700 of Figure 7. The vehicle operation vehicle flow diagram 700 includes a series of sequential blocks. The sequence of blocks may occur in a different order or in parallel in other examples. Hence, the present invention is not limited to the sequence as set out in Figure 7.

In the example, a display, such as display 218 of vehicle 100 is used by the controller 202 to display coverage information at block 702. The coverage information may include one or more of GNSS enabled regions, GNSS denied regions, and LPS coverage regions. The display may be a cockpit display in an airplane example. In another example, such as an unmanned aircraft example, the display may be at a remote location to the vehicle. In the example, of the vehicle operation vehicle flow diagram 600, it is determined if the vehicle is about to leave a boundary of a GNSS enabled region. If the vehicle is not about to leave a GNSS coverage region, the process continues monitoring the location in the GNSS coverage region at block 704.

If it is determined that the vehicle is about to leave a GNSS coverage region at block 704 (i.e., leave a boundary of the GNSS coverage region), in one example, a warning or alert is provided to the crew members (operators) of the vehicle at block 705. The warning may be in the form of an audio warning and/or a visual warning displayed on display 218. In an avionic application the display may be a primary flight display. In another example, another warning or alert may be provided to the crew members when it is determined the vehicle is about to leave a LPS coverage region boundary.

Navigation reference points (waypoints) in LPS coverage regions, such as LPS coverage region 120, are then provided for navigation of the vehicle at block 706. Directing vehicle 100 to LPS coverage region 120 allows the vehicle 100 to be able to get position coordinates through the LPS 201. In one example, when vehicle 100 is about to leave the GNSS enabled region at block 704, a cockpit display, such as display 218 in an avionic application, highlights LPS coverage region 120. Further in an example, when waypoints/other-reference-points are made available in an UAM region, waypoints may be placed within an LPS coverage region 120 to ensure heading and navigation information is available for the vehicle.

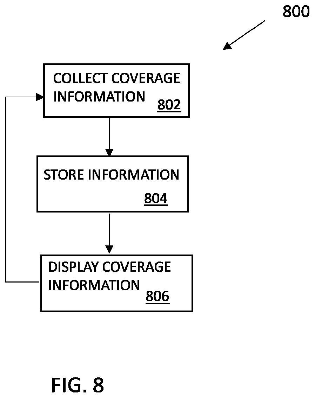

Further one example, database 212 is used for identifying and displaying GNSS denied region and LPS coverage region in a travel path of a vehicle. A method of generating the database and providing coverage region to a vehicle is illustrated in the coverage region flow diagram 800 of Figure 8. The coverage region flow diagram 800 includes a series of sequential blocks. The sequence of blocks may occur in a different order or in parallel in other examples. Hence, the present invention is not limited to the sequence as set out in Figure 8.

The coverage region flow diagram 800 in this example starts at block 802 collecting coverage information. In one example, an unmanned aerial vehicle (UAV) may be used to collect the coverage information. A UAV may be effectively flown in an urban environment to collect 3-dimensional coverage information. The coverage information may include GNSS coverage region 118, GNSS denied region 130 and LPS coverage region 120. The coverage information includes coordinates of the locations where the coverage information is collected. The coverage information is stored in a memory at block 804. In one example the coverage information is stored in database 212 in memory 210. Further in an embodiment, the coverage information is communicated to a remote location where it is compiled and stored in database that is disseminated to other vehicles.

The stored coverage information may then be used by the controller 202 to display the coverage information (i.e., at least one of the GNSS coverage region 118, GNSS denied region 130 and LPS coverage region 120) near or within a travel path of the vehicle 100 at block 806. In one example the coverage information may be used to create a 3-dimentional visualization of at least one of the GNSS coverage region 118, GNSS denied region 130 and LPS coverage region 120 on the display 218. The process continues at block 802.

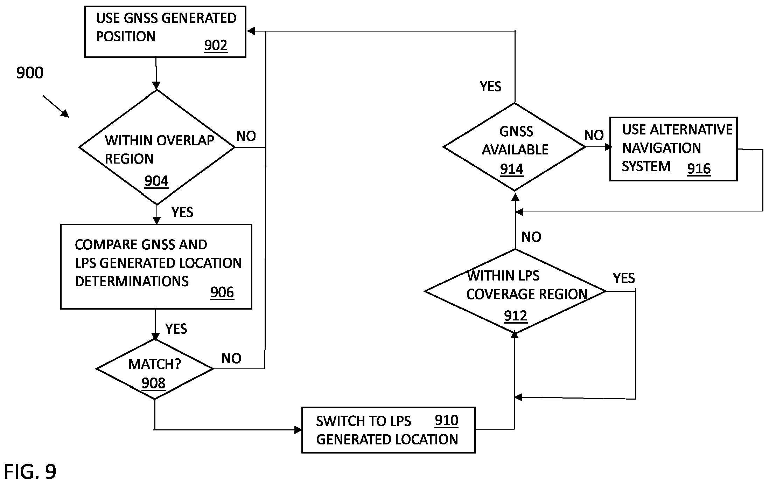

An example of a method which may be used by controller 202 to transition from GNSS to LPS in a situation where an overlap in coverage is provided is illustrated in the overlap transitioning flow diagram 900 of Figure 9. The overlap transitioning flow diagram 900 includes a series of sequential blocks. The sequence of blocks may occur in a different order or in parallel in other examples. Hence, the present invention is not limited to the sequence as set out in Figure 9.

At block 902 the vehicle is using position or location information from the GNSS. At block 904 it is determined if the vehicle, such as vehicle 100, is in an overlap region, such as overlap region 132. If the vehicle is not within an overlap region, the process continues to use the position information at block 902. If it is determined at block 904 that the vehicle is within an overlap region, vehicle position of location determinations from both the GNSS and LPS are compared at block 906.

It is determined at block 908 if a match between a GNSS location and an LPS location positions is found. If a match is not found at block 908, the process continues at block 902 in an example. If a match is found at block 908, the location (position) computing is switched to LPS generated location information at block 910.

It is then determined at block 912 if the vehicle is still within the LPS coverage region. If it is determined that the vehicle is still within the LPS coverage region, the process continues at block 912 monitoring if the vehicle is still within the LPS coverage region. If it is determined at block 912, the vehicle is no longer within the LPS coverage region, it is determined at block 914 if GNSS is available. If GNSS is available a GNSS generated location is used if available at block 902. If GNSS is not available, alternative navigation systems may be used at block 916 until GNSS becomes available. Alternative navigation systems using other systems such as INS 206, as well as other sensors 207 such as, but not limited to, altimeters, magnetic field sensors, cameras, LiDAR, radars, radios, and star-trackers etc. may be used.

Further, since LPS computed locations are precise and without errors because they are based on the precision time atomic clocks, the LPS 201 may be used to remove location (position) and computer errors in GNSS position determinations when an overlap in coverage is provided for safety reasons.

In one avionic example, controller 202 of vehicle 100 (aircraft), may use other sensors 207, such as an altimeter, to ascend safely back into a GNSS coverage region 118 until the vehicle can once again travel on its intended path. In ascending back to the GNSS coverage region 118 other sensors, for example, radar sensors, may be used to ensure clear separation from other vehicles, buildings, terrain, etc. may be used.

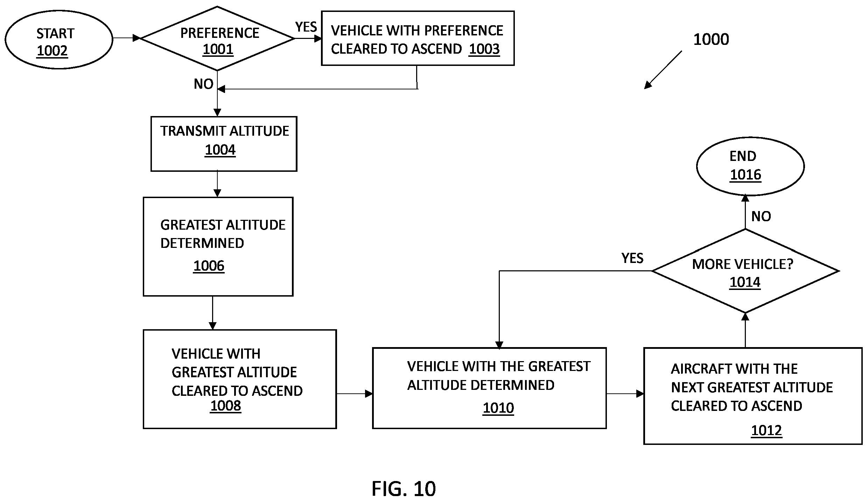

In a situation where there are more than one aircraft in close vicinity to each other that have moved out of a LPS coverage region 120 into a GNSS denied region 130, a method of moving the aircraft in a safe manner is needed. An example method of coordinating movement of vehicles 100 in close vicinity outside of LPS and GNSS is illustrated in the coordinated vehicle movement flow diagram 1000 of Figure 10. The coordinated vehicle movement flow diagram 1000 includes a series of sequential blocks. The sequence of blocks may occur in a different order or in parallel in other examples. Hence, the present invention is not limited to the sequence as set out in Figure 10.

The coordinated vehicle movement flow diagram 1000 starts at block 1002. In one example it is determined if one or more of the vehicles have a preference to ascend before the other vehicles at block 1001. For example, a fixed wing aircraft may have preference over an aircraft that can hover. If it is determined that one of the vehicles has a preference, that vehicle is cleared to ascent to a GNSS coverage region 118 at block 1003.

The process continues at block 1004, where each vehicle transmits its altitude to a remote location at block 1004. The remote location, in an avionic example, maybe an air traffic controller. Once all the altitudes are transmitted to the remote location, the remote location determines the vehicle with the greatest altitude at block 1006. The vehicle with the greatest altitude is then cleared by the remote location to ascend at block 1008. The vehicle with the greatest altitude may then ascend into a GNSS coverage region 130 as directed by a relevant traffic controller. A relevant traffic controller may be a UAM traffic controller in a UAM traffic example. Further in an aircraft example, the relevant traffic controller may be an air traffic controller.

The vehicle with the next greatest altitude is determined at block 1010. The determined vehicle with the next greatest altitude is then cleared by the remote location to ascend at block 1012. The vehicle with the next greatest altitude may then ascend into a GNSS coverage region 130.

At block 1014 it is determined if there are any more vehicles outside the LPS coverage region 120 and GNSS coverage region 118. If it is determined at block 1014 there are more vehicles outside the LPS coverage region 120 and the GNSS coverage region 118, the process continues at block 1010 determining the next vehicle with the greatest altitude. Once all the vehicles have moved from outside the LPS coverage region 120 and GNSS coverage region 118 the process ends at block 1016.

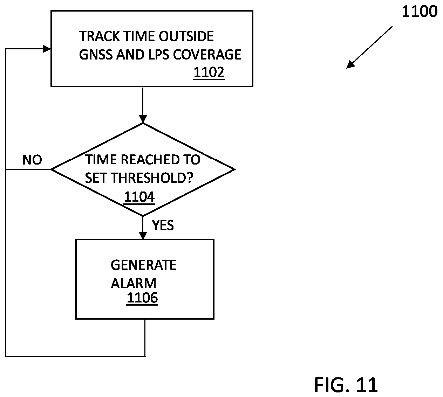

Further in an example, if a vehicle 100 is outside a GNSS coverage region 118 and LPS coverage region 120, the vehicle may be directed to GNSS coverage region 118 and LPS coverage region 120 after a select period of time to correct for errors that have accumulated. An example method of this is illustrated in the error correction flow diagram 1100 of Figure 11. The error correction flow diagram 1100 includes a series of sequential blocks. The sequence of blocks may occur in a different order or in parallel in other examples. Hence, the present invention is not limited to the sequence as set out in Figure 11.

At block 1102, the length of time outside of GNSS and LPS coverage regions is tracked while the associated vehicle is traversing along a travel path. At block 1104 it is determined if the time outside of the GNSS and LPS coverage regions has reached a set threshold. The threshold time is a set time in which moderate error accumulation in computed vehicle location may occur without GNSS and LPS assistance. If the threshold has not been reached at block 1104, the process continues monitoring at block 1102. Once the time threshold has been reached at block 1104, an alarm is generated at block 1106. The alarm alerts crew members of the vehicle that they need to fly or drive the vehicle to the nearest GNSS coverage region 118 or LPS coverage region 120 to correct for the error accumulation. The alarms may be audible and/or visual alarms. An example of an alarm is alarm 221 of vehicle 100 in Figure 2. Further in an example, the vehicle control system 216 may be directed to control the vehicle to nearest GNSS coverage region 118 or LPS coverage region 120.

As discussed above, when a vehicle is outside of the GNSS and LPS coverage regions, the vehicle may use other navigation systems (i.e., INS etc.) and sensors 207 (i.e., radar, altimeter etc.) to continue on the vehicles intended path until error free position computation is available. The other navigation systems and sensors may be used to ensure the vehicle's travel path has clear separation from other vehicles as well as buildings, terrain, etc.

Maintenance of the transmitters 104 may be accomplished with the use of drones that are periodically used to verify that each transmitter is transmitting their designated LPS signal to cover an associated LPS coverage region.

### EXAMPLE EMBODIMENTS

Example 1 is a method of determining a location of a, the method includes using a global navigation satellite system (GNSS) to determine the location of the vehicle when satellite signals from at least four satellites of the GNSS are being received by a GNSS receiver of the vehicle; and using a local positioning system (LPS) to determine the location of the vehicle when the vehicle is within a LPS coverage region of the LPS, wherein the LPS coverage region is a region that provides a LPS signal from at least four fixed location LPS signal transmitters, each LPS signal from each LPS transmitter includes transmitter location information and clock information used by a controller of the vehicle to determine the location of the vehicle.

Example 2 includes the method of Example 1, wherein each LPS transmitter includes an atomic clock.

Example 3 includes the method of any of the Examples 1-2, where the LPS coverage region is formed at least in part in a GNSS denied region.

Example 4 includes the method of any of the Examples 1-3, further including displaying GNSS denied regions on a vehicle display as the vehicle travels along a travel path to alert vehicle crew members that the vehicle is about to travel within a GNSS denied region.

Example 5 includes the method of any of the Examples 1-4, further including using a position of the vehicle determined with use of the LPS to calibrate an alternative navigation system of the vehicle.

Example 6 includes the method of Example 5, wherein the alternative navigation system is an inertial navigation system.

Example 7 includes the method of any of the Examples 1-6, further including tracking length of time the vehicle is traversing through a GNSS denied region to determine if a calibration of an alternative navigation system should occur with an LPS location when the vehicle enters the LPS coverage region.

Example 8 includes the method of any of the Examples 1-7, further including using the LPS to guide the vehicle to at least one of a GNSS coverage region and a designated stopping location.

Example 9 includes the method of any of the Examples 1-8, further including integrity checking an LPS location determination by the LPS.

Example 10 includes the method of Example 9, wherein the integrity checking the location determination by the LPS further includes determining the location of the vehicle in relation to a first integrity coverage region and a second integrity coverage region, wherein the first integrity region is generated by a LPS transmitter transmitting a first LPS signal having a first intensity and a first frequency at a first time that reaches a first distance from the LPS transmitter and the second integrity region is generated by the LPS transmitter transmitting a second LPS signal having a second intensity and a second frequency at a second time to generate a second integrity coverage region that extends a second distance from the LPS transmitter, the second integrity coverage region includes part of the first integrity coverage region and the second integrity coverage region; and comparing a determined LPS location of the vehicle with the determined location of the vehicle in relation to the first integrity coverage region and the second integrity coverage region to determine the integrity of the determined LPS location.

Example 11 includes the method of any of the Examples 1-10, further including providing priority cues to guide the vehicle to at least one of a GNSS coverage region and a designated stopping location when within the LPS coverage region.

Example 12 includes the method of any of the Examples 1-11, further including providing alerts when the vehicle is close to a boundary of at least one of a GNSS coverage region and the LPS coverage region.

Example 13 includes the method of any of the Examples 1-2, further including collecting LPS coverage region information; and storing the LPS coverage region information in a database.

Example 14 includes the method of any of the Examples 1-13, further including comparing a GNSS location determination with a LPS location determination when a GNSS coverage region overlaps with the LPS coverage region; and using the LPS to determine a location once there is a match between the GNSS location determination and the LPS location determination.

Example 15 includes the method of any of the Examples 1-14, further including tracking a length of time the vehicle is outside of a GNSS coverage region and the LPS coverage region; and generating an alarm when the tracked length of time reaches a threshold.

Example 16 includes the method of any of the Examples 1-15, further including receiving a direction to ascend to a GNSS coverage based on a clearing of a plurality of vehicles that includes the vehicle based on an altitude of each vehicle of plurality of vehicles.

Example 17 includes a navigation system. The vehicle location determining system includes a GNSS receiver, LPS positioning system receiver, a memory, and a controller. The GNSS is used to receive satellite signals from a plurality satellites. The LPS receiver is used to receive LPS signals from a plurality of fixed location LPS transmitters that are positioned to form an LPS coverage region. The memory to store at least operating instructions. The controller is in communication with the GNSS receiver, the LPS receiver, and the memory. The controller is configured to use the LPS signals to determine a location of the vehicle when the vehicle is within the LPS coverage region and within a GNSS denied coverage region. The LPS coverage region is a region that provides the LPS signals from at least four fixed location LPS transmitters. Each LPS signal from each LPS transmitter includes LPS transmitter location information and clock information used by the controller of the vehicle to determine the location of the vehicle.

Example 18 includes the navigation system of Example 17, wherein the controller is configured to determine the location of the vehicle using the satellite signals received by the GNSS receiver when the vehicle is in a GNSS coverage region.

Example 19 includes another vehicle location determining system that uses an LPS. The vehicle location determining system includes a display, GNSS receiver, LPS positioning system receiver, an INS, a memory, and a controller. The GNSS receiver is used to receive satellite signals from a plurality of satellites. The LPS receiver is used to receive LPS signals from a plurality of fixed location LPS transmitters that are positioned to form an LPS coverage region. The INS is used to at least determine relative measurements given an initial reference. The memory is used to store at least operating instructions. The memory includes a database that includes at least GNSS coverage regions and LPS coverage regions. The controller is in communication with the GNSS receiver, the LPS receiver, the INS, the memory, and the display. The controller is configured to use the LPS signals to determine a location of the vehicle when the vehicle is within the LPS coverage region and within a GNSS denied coverage region. The LPS coverage region is a region that provides the LPS signals from at least four fixed location LPS transmitters. Each LPS signal from each LPS transmitter includes LPS transmitter location information and clock information used by the controller of the vehicle to determine the location of the vehicle. The controller further configured to use the location of the vehicle determined with the use of the LPS to calibrate the INS. The controller is also configured to use the display to display the GNSS coverage regions and the LPS coverage regions stored in the database.

Example 20 includes the vehicle location determining system of Example 19, wherein the controller is configured to track a length of time the vehicle is outside of the GNSS coverage regions and the LPS coverage regions and generate an alarm when the tracked time reaches a threshold.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A method of determining a location of a vehicle (100), the method comprising:
using a global navigation satellite system (GNSS) to determine the location of the vehicle (100) when satellite signals from at least four satellites (102) of the GNSS are being received by a GNSS receiver (208) of the vehicle (100); and
using a local positioning system (LPS) (201) to determine the location of the vehicle (100) when the vehicle (100) is within a LPS coverage region (120) of the LPS (201), wherein the LPS coverage region (120) is a region that provides a LPS signal from at least four fixed location LPS signal transmitters (104), each LPS signal from each LPS transmitter (104) includes transmitter location information and clock information used by a controller (202) of the vehicle (100) to determine the location of the vehicle (100).

2. The method of claim 1, wherein each LPS transmitter (104) includes an atomic clock (107).

3. The method of claim 1, where the LPS coverage region (120) is formed at least in part in a GNSS denied region (130).

4. The method of claim 1, further comprising:
displaying GNSS denied regions (130) on a vehicle display (218) as the vehicle (100) travels along a travel path to alert vehicle crew members that the vehicle (100) is about to travel within a GNSS denied region (130).

5. The method of claim 1, further comprising:
using a position of the vehicle (100) determined with use of the LPS (201) to calibrate an alternative navigation system (206) of the vehicle (100).

6. The method of claim 1, further comprising:
tracking a time the vehicle (100) is traversing through a GNSS denied region (130) to determine if a calibration of an alternative navigation system should occur with an LPS location when the vehicle enters the LPS coverage region (120).

7. The method of claim 1, further comprising:
using the LPS (201) to guide the vehicle (100) to at least one of a GNSS coverage region (118) and a designated stopping location.

8. The method of claim 1, further comprising:
integrity checking a LPS location determination by the LPS (201).

9. A navigation system (101) comprising:
a global positioning satellite system (GNSS) receiver (208) to receive satellite signals from a plurality satellites (102);
a local positioning system (LPS) receiver (204) to receive LPS signals from a plurality of fixed location LPS transmitters (104) that are positioned to form a LPS coverage region (120);
a memory (210) to store at least operating instructions; and
a controller (202) in communication with the GNSS receiver (208), the LPS receiver (204), and the memory (210), the controller (202) configured to use the LPS signals to determine a location of the vehicle (100) when the vehicle (100) is within the LPS coverage region (120) and within a GNSS denied coverage region (130); wherein the LPS coverage region (120) is a region that provides the LPS signals from at least four fixed location LPS transmitters (104), each LPS signal from each LPS transmitter (104) includes LPS transmitter location information and clock information used by the controller (202) of the vehicle (100) to determine the location of the vehicle (100).

10. The vehicle location determining system (101) of claim 9, wherein the controller (202) is configured to determine the location of the vehicle (100) using the satellite signals received by the GNSS receiver (208) when the vehicle is in a GNSS coverage region (118).
